# EUROPEAN PATENT SPECIFICATION

(11) **EP 1 304 931 B1**
(45) Date of publication and mention of the grant of the patent: **09.02.2011**
(21) Application number: 01956532.4
(22) Date of filing: 12.07.2001
(51) Int. Cl.: A23L 1/32, A23L 1/187, A23J 3/08, A23B 5/035, A23C 9/154

(54) **EGG-BASED POWDER AND FOOD CONTAINING THE SAME**
PULVERFÖRMIGE PRODUKTE AUF EIBASIS UND DIESEN ENTHALTENDE NAHRUNGSMITTEL
POUDRE A BASE D'OEUFS ET ALIMENTS LA CONTENANT

(30) Priority: 21.07.2000 EP 00115708
(43) Date of publication of application: 02.05.2003
(73) Proprietor: SOCIETE DES PRODUITS NESTLE S.A., 1800 Vevey (CH)
(72) Inventor: BISSON, Jean-Pierre, F-14000 Caen (FR); ABRAHAM, Denis, F-14130 Coquainvilliers (FR)
(74) Representative: Thomas, Alain
(86) International application number: PCT/EP2001/008095
(87) International publication number: WO 2002/007541

(56) References cited:
- EP-A- 0 820 704
- FR-A- 2 118 688
- FR-A- 2 737 643
- US-A- 3 143 427
- US-A- 3 475 180
- US-A- 4 364 966
- US-A- 4 440 791

## Description

The invention relates to a pasteurized egg-based powder whose organoleptic and functional properties are similar to those of egg after reconstituting in an aqueous medium.

It also relates to an egg-based fermented food of a novel type, manufactured from such a composition.

Eggs are often used for their excellent functional properties, for example their gelling and emulsifying properties, for their colour and for their taste. It is known that egg-based food products are not free of microbiological risks since eggs may contain sporulated microorganisms and salmonella. Egg proteins usually lose their functional properties, in particular their gelling ability, under the heat treatment conditions which would be necessary for the elimination of resistant spores and salmonella. Accordingly, industrial egg products are generally pasteurized, which does not eliminate all risks. Because of residual risks, the use of eggs is limited. In particular, the use of eggs which have been simply pasteurized in a conventional manner under conditions which maintain their organoleptic and functional properties would not be possible in food products which have to undergo fermentation.

A spray-dried composition based on egg and skimmed milk capable of being reconstituted in water is known for example from FR-A-2 118 688. This composition results from drying a mixture of whole egg and skimmed milk which have been separately pasteurized. In particular, the egg is heat-treated at 64.5°C/2 min 1/2, which does not make it possible to ensure complete absence of salmonella. That is not essential in the context of this document since the egg/milk powder is intended for use in cakes which are manufactured by prolonged baking of the mix at high temperature. This composition cannot be used in uncooked food products, for example, dairy products.

A fermented drink based on milk and egg is also known for example from FR-A-2 737 643. Such a drink is manufactured by preparing a liquid egg mixture which has been highly diluted in water, supplemented with skimmed milk powder, glucose and fructose, the content of egg not exceeding 10% in the mixture, heat treatment by pasteurization, cooling followed by lactic acid fermentation of the mixture thus treated. This product is not based on a powder and the egg is treated with a high temperature while being strongly diluted in water.

It is for example known from EP-A-0 820 704 that it is possible to sterilize a mixture of milk, egg and sugar by the liquid route and, where appropriate, drying the mixture, thereby losing the functional properties of the egg and using the gelling properties of the casein in the presence of calcium under the effect of heat to replace the functional properties of the egg which are lost during the hygienization heat treatment. The re-established gelling properties of the system are exploited to manufacture desserts of the flan type.

The problem forming the basis of the present invention is the making available of a product based on whole egg, which would have the desired functionality, in particular the emulsifying ability and the gelling capacity, which could be used in the preparation of food products while being hygienic and in particular which would be suitable for the preparation of dairy food products.

There is also a need for an easy to use texturising powder, which has a natural image, the advantage of egg, and which is safe to use in all food products including uncooked foods.

The invention relates to a texturizing powder suitable for use in cooked and uncooked food products, comprizing a pasteurised mixture of non-coagulated egg and milk protein; the mixture being pasteurised at a temperature above 67°C.

In another aspect, the present invention relates to a texturizing powder for a food product comprising:
a milk protein component, and an egg component,
the components being pasteurized, in the form of a mixture, so as to eliminate bacteria,
the mixture being dried,
and the powder retaining the functional and organoleptic properties of the egg once reconstituted in an aqueous medium.

In a third aspect, the present invention relates to a texturizing powder comprising egg and milk protein, the powder obtainable by creating a mixture of egg and milk protein,
pasteurizing the mixture at a temperature above 67°C,
drying the mixture.

The powder is stable for a long period from the microbiological point of view and has the property of not being susceptible to recontamination as would be the case for a composition in liquid form. Furthermore, there is no phase separation or settling out during storage or upon reconstitution.

Without wishing to be bound by theory it is postulated that the milk or whey proteins protect the egg proteins from coagulation at a temperature above 64°C. This protection may account for the ability to conduct a pasteurization even above 70°C, which means that hygiene criteria for many uncooked products are met, while at the same time the functional properties of egg are not lost.

In another aspect, the present invention relates to a food product or a beverage, which contains the powder.

The present invention also relates to a chilled dairy product, which contains pasteurized eggs as a texturizing agent and which has the same organoleptic properties of a product containing fresh eggs.

In a further aspect, the present invention provied a process for preparing a powder, in which a concentrated lactic base rich in whey protein or in leguminous plant protein, and liquid egg is mixed, and then the mixture is pasteurized by heat treatment at above 67°C while preserving the organoleptic and functional properties of the egg and it is dried.

In another aspect, the present invention provides a process for manufacturing a chilled dairy product, in which a mixture of whole milk or milk which has been skimmed to a greater or lesser degree, carbohydrates and the powder set out above is prepared by dissolution and the mixture is treated by lactic acid fermentation. In another aspect, the present invention relates to the use of the powder described above as a replacement for egg in an egg-based product.

Preferably, the powder is obtained without addition of stabilizing or emulsifying additives, and without adding water before pasteurization.

Preferably, the powder is easily reconstitutable in water.

Preferably, the dry weight ratio of egg to milk protein in the powder is 0.5:1 to 1.5:1, more preferably 0.8:1 to 1.2:1. If the milk protein is whey protein, the powder preferably comprises 35 to 55% of whey protein and 45 to 65% by weight of egg, with respect to dry matter. More preferably, it comprises 40 to 50% whey protein and 50 to 60% of egg.

The milk proteins are derived from a whey concentrate containing 35 to 80% by weight of proteins. Such a concentrate is advantageously obtained from the ultrafiltration or the microfiltration of sweet or acid whey from casein making or from cheese making.

Pasteurization temperature is above 67°C, preferably above 70°C, 72°C, 74°C or 76°C. For example, the pasteurization temperature is between 70 and 75°C. In an embodiment, the pasteurization temperature is between 70 and 76°C, preferably between 72 and 76°C.

The egg preferably is low temperature pasteurized whole egg.

Low temperature pasteurization of egg, in the context of the present invention, refers to a pasteurization temperature, which is equal to or lower than 65°C. In general, it refers to a temperature at which the egg proteins contained in egg do not coagulate. For undiluted eggs or eggs not supplemented by additives this temperature is considered to be around 65.5°C.

Preferably, at least 30% by weight of the dry matter content of the powder is derived from whey.

The invention also relates to a process for preparing a product above, in which a concentrated lactic base rich in whey protein or in leguminous plant protein, and liquid egg is mixed, and then the mixture is pasteurized by heat treatment at above 67°C and at most 78°C for 10-20s while preserving the organoleptic and functional properties of the egg are the mixture is dried.

In an embodiment, of the process, in which the egg component and the lactic base are mixed, the pH is adjusted, where appropriate, to a value ranging from 6.5 to 7.5, and the mixture is then pasteurized according to the invention at a temperature of at most 78°C for 10-20 s.

In the context of the invention, the expression lactic base rich in whey protein is understood to mean any raw material of lactic origin containing lactic proteins, rich in serum proteins, in particular in lactalbumins. It is possible to use any raw material containing whey proteins in concentrated form, for example an acid whey from casein making or a sweet whey from cheese making, obtained by separating the curd containing the casein, preferably concentrated by ultrafiltration or microfiltration, followed, where appropriate, by diafiltration (ultrafiltration with washing with water). The concentrate may be demineralized or made lactose free to a greater or lesser degree.

As a variant, it is possible to use, as source of lactic protein, a vegetable milk, for example a soyabean milk, concentrate or isolate, with a high concentration of , proteins, Equally, the milk protein may be replaced by meat protein.

The liquid egg which may be used in the process of the invention is a whole egg in liquid form, which has been pasteurized beforehand. It is possible to use fresh egg, ripened egg, that is to say which has been stored at refrigeration temperature, for example at about 4°C, for a period of up to several days, a mixture of egg white and egg yolk having been ripened separately all these raw materials having been separately pasteurized.

To carry out the process, the undiluted egg component and the milk protein component are mixed, with stirring, the pH is adjusted, where appropriate, to a value ranging from 6.5 to 7.5, and then the mixture is preheated, for example using a plate exchanger, preferably at a temperature of less than or equal to 75°C.

The pasteurization treatment may be carried out in an indirect manner by means of a plate exchanger. As a variant, it is possible to carry it out in a jacketed holding unit. The pasteurization should be carried out under conditions which are lethal for salmonella while making it possible not to coagulate the egg, in short to preserve its functional qualities, in particular its emulsifying and gelling powers, and its organoleptic qualities, in particular its taste and its colour. It takes place preferably at a temperature of at most 76°C for 10-20 s.

The mixture in question is then dried, for example spray-dried in a drying tower under moderate to medium conditions.

Once dried, and where appropriate supplemented with other dehydrated ingredients of the recipe, the mixture may be reconstituted with an aqueous medium and then subjected to subsequent treatment for preparing an egg-based food as a replacement for egg.

Thus, the powder according to the invention may be used as a basic ingredient in any food comprising the use, in the form of a mixture, of milk, egg and carbohydrates with the aim of forming a gel upon cooking. There may be mentioned savoury culinary preparations for flan, omelettes, quiches or sauces, or sweetened preparations for pastry, in particular for cakes, creams or flans.

The invention also relates to a food product or a beverage, which contains the powder described above.

The invention also relates to a chilled dairy product, which contains pasteurized eggs as a texturizing agent and which has the same organoleptic properties of a product containing fresh eggs.

In an embodiment, the product is free of other gelifying and texturizing agents, additives, hydrocolloids or gelatine.

The invention also relates to dairy product containing egg, chosen from milk drinks, yoghurts and desserts, containing 0.5 to 10% by weight of a powder above.

The product may be in the form of a gelled dessert of the flan or mousse type. It may be in the form of set or creamy yoghurt. It may also constitute an acid drink.

The product may also be a fromage frais.

In an embodiment, the food product is a mayonnaise.

The invention also relates to a process for manufacturing a fermented food product above, in which a mixture of whole milk or milk which has been skimmed to a greater or lesser degree, carbohydrates and powder described above is prepared by dissolution and the mixture is treated so as to form a gel by lactic acid fermentation.

It is possible to start with fresh milk, standardized by adding cream or vegetable fat. It is also possible to start with milk reconstituted from skimmed milk powder and anhydrous lactic fat.

The carbohydrates which may be used in the above process are in particular sucrose and lactose, when it is desired to use the product according to the invention to manufacture a sweetened food, alone or in the form of a mixture. The carbohydrates represent 3 to 20% and preferably about 10% by weight of the mixture.

After dissolution, the mixture may be pasteurized, for example at 90-105°C for 2 to 10 min, cooled to about 70-75°C and then homogenized in a 1 or 2-stage homogenizer, preferably, for a single stage, at a pressure of 75 to 300 bar, or for two stages, at pressures of 75/15 bar to 300/60 bar, and then cooled to a temperature, chosen for the fermentation, of 25 to 45°C.

The fermentation is carried out in a conventional manner. To do this, it is possible to use lactic ferments in yoghurt and/or in fromage frais, where appropriate with probiotic ferments.

A gel may be prepared which may constitute the final fermented product. It is also possible to smooth the fermented mass or to give it a degree of overrun.

The fermented product thus obtained may constitute the final product or may constitute a fermented filling, where appropriate in the presence of other components as receptacle, inclusions, accessories or flavouring ingredients.

The heat treatment for pasteurizing the eggs in the form of a mixture with the milk proteins does not destroy the functional properties of the egg proteins. Thus, the preparation of a food, for example a flan or a mousse, remains possible by virtue of the exploitation of the gelling properties and of the overrun and emulsifying capacity of the egg proteins. In particular, the powder according to the invention is suitable for conventional cooking in a hot air oven or even for indirect sterilization in a heat exchanger, for example at 120-125°C/20 s in the presence of the other ingredients of the dessert.

If a mayonnaise is produced, the powder according to the present invention may replace part or all of the egg in the mayonnaise. Any mayonnaise may be produced with the powder, for example 80% fat, 50% or 35 % fat (in percent by weight). The contents of all ingredients may therefore be varied according to personal gusto.Usually, all ingredients of the mayonnaise, including the powder, are mixed and the oil is emulsified in, which may be by batch wise operating emulsifyer machines, with continous emusifyer machines or with colloid mills. Different oil-drop sizes may be optained by this process, for example 3 to 10 µm.

If the fat content is desired to be lower, there are usually thickeners mixed separately in an aquous solution, heated and finally introduced into the basic mayonnaise as obtained above. In general, the same recipies like known may be used and the classic egg powders are just partially or totally replaced by the powder according to the present invention.

The examples below illustrate the invention. In these examples, the parts and percentages are by weight, unless otherwise stated.

### Example 1

### Preparation of a powder

A sweet whey concentrate from cheese making, obtained from ultrafiltration and containing 35% of protein, is dissolved in water and liquid whole egg, pasteurized beforehand, is added in a tank, with stirring, so as to obtain 55.5% egg dry matter content per 44.5% whey dry matter content.

After having adjusted, where appropriate, the pH to a value of 6.8 to 7.2 by adding a food grade concentrated aqueous sodium hydroxide solution, the mixture is pumped, by means of a positive pump, to a plate exchanger where it is heated to 72°C and maintained at this temperature for 15 s; it is cooled to 60°C and then it is spray-dried in a drying tower in an air stream, the hot air admission temperature being 190°C and the air outlet temperature 92°C.

### Example 2

### Preparation of a filling for quiche

The powder of Example 1 is used by dissolving it in an amount of 3.5% in 87.5% whole milk and adding 9% sucrose, as a base for producing a quiche Lorraine. After baking in an oven in a conventional manner, the texture and the taste of the quiche are similar to those of a traditional quiche.

### Example 3

### Preparation of a fermented dessert flan

The powder of Example 1 is used by dissolving it in an amount of 2.88% in 84.6% whole milk and adding 8.72% sucrose. After pasteurizing at 105°C/2 min, the mixture is cooled to 45°C and homogenized in a 2-stage device at an overall pressure of 300 bar, and it is then cooled to 40°C. It is inoculated with 3.8% of a mixture of ferments for yoghurt and it is incubated at 40°C until a pH of 4.7 is obtained. The product thus obtained is cooled in a cold chamber at 4-6°C and stored at this temperature. After cooling, the firmness of the gel is totally comparable to that of a home-made flan obtained conventionally from fresh eggs.

### Example 4

### Preparation of a stirred yoghurt

The powder of Example 1 is used by dissolving it in an amount of 3.42% in 84.12% of whole milk and by adding 8.66% sucrose. After pasteurizing at 105°C/2 min, the mixture is cooled to 45°C and homogenized in a single-stage device at 300 bar, and it is then cooled to 40°C. It is inoculated with 3.8% of a mixture of ferments for yoghurt and incubated at 40°C until a pH of 4.6 is obtained. The fermented mixture is then smoothed, cooled to 6°C and poured into pots which are sealed.

### Example 5

### Preparation of an egg-based fermented drink

The powder of Example 1 is used by dissolving it in an amount of 2.48% in 80.85% of water and adding 8.2% of sucrose, 7.07% of powdered skimmed milk and 1.38% of anhydrous lactic fat. After pasteurizing at 105°C/2 min, the liquid is cooled to 75°C and the mixture is homogenized in a 2-stage device at an overall pressure of 300 bar and it is then cooled to 40°C. It is inoculated with 0.02% of a thermophilic lactic ferment for yoghurt and incubated at 40°C until a pH < 5 is obtained; the curd mass is smoothed and cooled to 6°C. Pots are then filled and sealed in a traditional manner.

### Example 6

### Preparation of a gelled fermented milk

A fatty gelled fermented milk of the yoghurt type enriched with probiotic bacteria is prepared. 89.3 parts of milk respectively containing 30 g/l of lactic fat are mixed with 3.7 parts of powder of Example 1 and the mixture is preheated to 70°C; it is pasteurized at 92°C/6 min and then, after cooling to 70°C, it is homogenized in a single-stage device at 300 bar. After cooling to 43°C, the mixture is inoculated with 2% of a common yoghurt starter Streptococcus thermophilus and Lactobacillus bulgaricus, to which 5% of Lactobacillus johnsonii (La1, CNCM I-1227) is added. After packaging in pots, the fermentation is carried out at 38°C until a pH of 4.6 is obtained, and then cooled to 6°C.

### Example 7

### Preparation of a dessert mousse

A pasteurized base which can be caused to acquire a degree of overrun, consisting of a mixture of lactic proteins, sugar, powder of Example 1, chocolate and cocoa, is prepared so as to manufacture a chocolate mousse, starting with the ingredients and in the proportions indicated in Table 1 below.

**Table 1**

| **Ingredients** | **%** |
|---|---|
| Whole milk or skimmed milk or water | 57.8 |
| Powder according to Example 1 | 4.6 |
| Sucrose | 14.6 |
| Dark chocolate and alkalized chocolate | 21 |
| Cocoa powder | 2 |

The ingredients are mixed, they are preheated to 70°C and then they are heat-treated by UHT with direct injection of steam at 143°C/10 s. After cooling by expansion under vacuum at 70°C, and then by plate exchanger at 10°C, the mixture is aerated in a Mondomix® apparatus for producing overrun until an overrun of 75-100% by volume is obtained.

### Example 8

### Preparation of a mayonnaise

An 80% fat mayonnaise (percent by weight) is prepared by mixing and stirring all ingredients but oil present in table 2 below. Then oil is emulsified in continuously with a roto/strato emulsifyer machine. In so doing, a mayonnaise with a mean oil drop size of 3 - 10 µm is achieved.

**Table 2 Ingredients for preparation of a 80%-fat mayonnaise**

| **Ingredients** | **%** |
|---|---|
| Water | 8.6025 |
| Salt | 1.1000 |
| Spirit vinegar 11 % | 2.700 |
| Lactic acid 88% | 0.7780 |
| Sunflower oil | 80.000 |
| Egg - milk powder from example 1 | 4.000 |
| Flavour, spices | 2.8195 |

## Claims

1. A texturising powder for food products, the powder comprising a pasteurised mixture of non-diluted liquid whole egg and milk protein components, said milk protein components being derived from a leguminous plant milk concentrate or a whey concentrate containing from 35% to 80 % by weight of protein, wherein the mixture is pasteurised at a temperature of above 67°C and at most 78°C, and then dried to form a powder in which the egg component is non-coagulated and that can be safely utilised in uncooked food products and that retains the functional and organoleptic properties of egg after reconstitution in a water medium.

2. The powder according to claim 1, wherein it is obtained without addition of stabilizing or emulsifying additives, and without adding water before pasteurization.

3. The powder according to any of claims 1 or 2, which is easily reconstitutable in water.

4. The powder according to any of claims 1 to 3, in which the milk proteins are a whey concentrate containing 35 to 80% by weight of proteins.

5. The powder according to any of claims 1 to 4, in which the egg is low temperature pasteurized whole egg.

6. The powder according to any of claims 1 to 5, in which at least 30% by weight of the dry matter content is derived from whey.

7. A food product or a beverage, which contains the powder according to any of claims 1 to 6.

8. The product according to claims 7, which is free of other jellifying and texturizing agents, additives, hydrocolloids or gelatine.

9. A dairy product chosen from milk drinks, fromage frais, yoghurts and desserts, containing 0.5 to 10% by weight of the powder according to one of Claims 1 to 7.

10. The product according to any of claims 7 to 9, which is a set or creamy fermented milk or yoghurt.

11. The product according to any of claims 7 to 9, which is an acid drink.

12. A process for preparing a powder according to any of claims 1 to 6, in which a concentrated lactic base rich in whey protein or in leguminous plant protein, and non-diluted liquid whole egg is mixed, and then the mixture is pasteurized by heat treatment at above 67°C and at most 78°C while preserving the organoleptic and functional properties of the egg and it is dried.

13. Process according to claim 12, in which the egg component and the lactic base are mixed, the pH is adjusted, where appropriate, to a value ranging from 6.5 to 7.5, and the mixture is then pasteurized at a temperature of at most 78°C for 10-20 s.

14. Process for manufacturing the product according to any of claims 7 to 9 or 10, in which a mixture of whole milk or milk which has been skimmed to a greater or lesser degree, carbohydrates and the powder according to any of claim 1 to 6 is prepared by dissolution and the mixture is treated by lactic acid fermentation.

## Patentansprüche

1. Struktur bildendes Pulver für Nahrungsmittelprodukte, wobei das Pulver eine pasteurisierte Mischung aus unverdünnten, flüssigen Vollei- und Milchproteinbestandteilen umfasst, wobei die Milchproteinbestandteile aus einem Hülsenfruchtmilchkonzentrat oder einem Molkekonzentrat erhalten sind, das zwischen 35 und 80 Gewichtsprozent an Protein enthält, wobei die Mischung bei einer Temperatur von mehr als 67 °C und höchstens 78°C pasteurisiert wird und daraufhin zur Bildung eines Pulvers getrocknet wird, bei welchem der Eibestandteil nicht koaguliert ist, welches in nicht gekochten Nahrungsmittelprodukten sicher verwendet werden kann und welches die funktionellen und organoleptischen Eigenschaften von Ei nach Rekonstitution in einem Wassermedium beibehält.

2. Pulver gemäß Anspruch 1, wobei dieses ohne Zugabe von stabilisierenden oder emulgierenden Zusätzen und ohne Zugabe von Wasser vor der Pasteurisierung erhalten wird.

3. Pulver gemäß einem der Ansprüche 1 oder 2, welches einfach in Wasser rekonstituiert werden kann.

4. Pulver gemäß einem der Ansprüche 1 bis 3, bei welchem die Milchproteine ein Molkekonzentrat mit 35 bis 80 Gewichtsprozent an Proteinen darstellen.

5. Pulver gemäß einem der Ansprüche 1 bis 4, bei welchem das Ei ein bei niedriger Temperatur pasteurisiertes Vollei ist.

6. Pulver gemäß einem der Ansprüche 1 bis 5, bei welchem mindestens 30 Gewichtsprozente des Gehaltes an Trockenmasse aus Molke abgeleitet sind.

7. Nahrungsmittelprodukt oder Getränk, welches das Pulver gemäß einem der Ansprüche 1 bis 6 enthält.

8. Produkt gemäß Anspruch 7, welches frei von anderen gelatinierenden und Struktur bildenden Mitteln, Zusätzen, Hydrokolloiden oder Gelatine ist.

9. Milchprodukt ausgewählt aus Milchgetränken, Frischkäse, Yoghurts und Desserts mit 0,5 bis 10 Gewichtsprozenten des Pulvers gemäß einem der Ansprüche 1 bis 7.

10. Produkt gemäß einem der Ansprüche 7 bis 9, welches eine fest gewordene oder cremige Dickmilch oder derartiges Yoghurt ist.

11. Produkt gemäß einem der Ansprüche 7 bis 9, welches ein saures Getränk ist.

12. Verfahren zur Zubereitung eines Pulvers gemäß einem der Ansprüche 1 bis 6, bei welchem eine konzentrierte milchige Base, die reich an Molkeprotein oder an Hülsenfruchtprotein ist, mit unverdünntem, flüssigen Vollei gemischt wird und daraufhin die Mischung durch Wärmebehandlung bei mehr als 67°C und höchstens 78°C unter Beibehaltung der organoleptischen und funktionellen Eigenschaften des Eis pasteurisiert und getrocknet wird.

13. Verfahren gemäß Anspruch 12, bei welchem der Eibestandteil und die milchige Base gemischt werden, der pH-Wert gegebenenfalls auf einen Wert zwischen 6,5 und 7,5 eingestellt wird und die Mischung dann bei einer Temperatur von höchstens 78°C 10-20 Sekunden lang pasteurisiert wird.

14. Verfahren zur Herstellung des Produktes gemäß einem der Ansprüche 7 bis 9 oder 10, bei welchem eine Mischung aus Vollmilch oder mehr oder weniger entrahmter Milch, Kohlenhydraten sowie dem Pulver gemäß einem der Ansprüche 1 bis 6 durch Auflösen zubereitet wird und die Mischung mit Gärungsmilchsäure behandelt wird.

## Revendications

1. Poudre texturante pour produits alimentaires, la poudre comprenant un mélange pasteurisé de composants liquides non dilués d'oeuf entier et de protéine du lait, lesdits composants de protéine du lait étant dérivés d'un concentré de lait de légumineuse ou d'un concentré de lactosérum contenant de 35 % à 80 % en poids de protéine,
le mélange étant pasteurisé à une température de plus de 67°C et d'au plus 78°C, et ensuite séché pour former une poudre dans laquelle le composant à base d'oeuf est non coagulé et qui peut être utilisée sans danger dans des produits alimentaires non cuits et qui garde les propriétés fonctionnelles et organoleptiques de l'oeuf après reconstitution dans un milieu à base d'eau.

2. La poudre selon la revendication 1, celle-ci étant obtenue sans addition d'additifs stabilisants ou émulsifiants, et sans ajout d'eau avant la pasteurisation.

3. La poudre selon l'une des revendications 1 ou 2, qui peut être aisément reconstituée dans de l'eau.

4. La poudre selon l'une des revendications 1 à 3, dans laquelle les protéines de lait sont un concentré de lactosérum contenant 35 à 80 % en poids de protéine.

5. La poudre selon l'une des revendications 1 à 4, dans laquelle l'oeuf est un oeuf entier pasteurisé à basse température.

6. La poudre selon l'une des revendications 1 à 5, dans laquelle au moins 30 % en poids du contenu de matière sèche est dérivé de lactosérum.

7. Produit alimentaire ou boisson, qui contient la poudre selon l'une des revendications 1 à 6.

8. Le produit selon la revendication 7, lequel est exempt d'autres agents gélifiants et texturants, d'additifs, d'hydrocolloïdes ou de gelatine.

9. Produit laitier choisi parmi les boissons lactées, le fromage frais, les yogourts et les desserts, contenant 0,5 à 10 % en poids de la poudre selon l'une des revendications 1 à 7.

10. Le produit selon l'une des revendications 7 à 9, lequel est un lait fermenté durci ou crémeux ou un yogourt de ce type.

11. Le produit selon l'une des revendications 7 à 9, lequel est une boisson acide.

12. Procédé pour préparer une poudre selon l'une des revendications 1 à 6, dans lequel une base lactique concentrée riche en protéine de lactosérum ou en protéine de légumineuse, et oeuf entier liquide non dilué est mélangée, et ensuite le mélange est pasteurisé par traitement thermique au-dessus de 67°C et au plus à 78°C tout en préservant les propriétés organoleptiques et fonctionnelles de l'oeuf, et il est séché.

13. Procédé selon la revendication 12, dans lequel le composant à base d'oeuf et la base lactique sont mélangés, le pH est ajusté le cas échéant à une valeur s'étendant de 6,5 à 7,5, et le mélange est ensuite pasteurisé à une température d'au plus 78°C pendant 10-20 s.

14. Procédé pour fabriquer le produit selon l'une des revendications 7 à 9 ou 10, dans lequel un mélange de lait entier ou de lait ayant été plus ou moins écrémé, des glucides et la poudre selon l'une des revendications 1 à 6 est préparé par dissolution et le mélange est traité par fermentation lactique.
